(19) **Europäisches Patentamt**

**European Patent Office**

**Office européen des brevets**

(11) **EP 0 768 565 B1**

(12) **EUROPEAN PATENT SPECIFICATION**

(45) Date of publication and mention
of the grant of the patent:
**26.03.2003   Bulletin 2003/13**

(51) Int Cl.⁷: **G03B 21/62**

(21) Application number: **96307348.1**

(22) Date of filing: **09.10.1996**

(54) **Light-diffusing screen**

Lichtstreuender Schirm

Ecran à diffusion de la lumière

(84) Designated Contracting States:
**DE FR GB NL**

(30) Priority: **12.10.1995   GB 9520912**

(43) Date of publication of application:
**16.04.1997   Bulletin 1997/16**

(73) Proprietors:
• **NASHUA CORPORATION
Nashua, NH 03061-2002 (US)**
• **NASHUA PHOTO LIMITED
Newton Abbot, Devon TG12 4PB (GB)**

(72) Inventors:
• **Phillips, Nicholas John
Loughborough, Leicestershire, LE11 0JN (GB)**
• **Yeo, Terence Edward
Kingsteignton, New Abbot,
Devon TG12 3ED (GB)**
• **Clabburn, Robin
Sevenhampton, Wiltshire SN6 7QA (GB)**
• **Batchelder, Lee Albert
Derry, New Hampshire 03038 (US)**

(74) Representative:
**Howden, Christopher Andrew et al
FORRESTER & BOEHMERT
Pettenkoferstrasse 20-22
80336 München (DE)**

(56) References cited:
**WO-A-88/09952          WO-A-94/29768**

**Description**

THIS INVENTION relates to a material suitable for use as a light diffusing screen or rear projection screen and to a material suitable for use as a front projection screen and for analogous purposes, such as in reflective signs, etc.

It is well known that the important parameters of projection screen materials include brightness, that is the amount of light, from the image source, reaching the viewer and the angles from the perpendicular to the surface of the material over which an acceptable brightness level (usually in excess of 50% of the maximum) is maintained.

In the following, reference is made to the "angle of view". In this specification, the term "angle of view" refers to the range of viewing angles of observers relative to a diffusing screen or a rear projection screen over which the apparent brightness of the screen is within 50% or more of the apparent brightness to an observer viewing the screen at right angles assuming that the light incident on the screen is incident along the normal to the screen. This figure is often referred to as "full width half maximum" or "fwhm". By way of example, the angle of view may be measured by illuminating a small area of the screen material by a laser beam (although some other collimated light beam may be used) directed normally to the plane of the screen and measuring the light diffused or reflected from that small area (according to whether a light diffusing screen - such as a back projection screen - or a reflective screen - such as a front projection screen - is involved), over a range of angles. Furthermore, in the following, the expression "angle of view for transmission" means "angle of view" defined as above for a screen of light-diffusing material illuminated by a projector or the like disposed on the opposite side of the plane of the screen from the observer, i.e. for a rear-projection screen whilst the expression "angle of view for reflection" means "angle of view" defined as above for a screen of light reflective material illuminated by a projector or the like disposed on the same side of the plane of the screen as the observer, i.e. for a front projection screen.

Established methods for producing materials suitable for front projection screens and for analogous purposes include, on the one hand, the lamination of light diffusing films to specular or "mirror like" surfaces and, on the other hand, incorporating geometric features into such surfaces, for example corner cube arrays. Where a light diffusing material is laminated to a mirror-like surface, the angle of view for reflection is approximately double the angle of view for transmission for small to moderate angles of view. With a front projection screen produced by incorporating geometric features in a reflective surface the angle of view is determined by the geometry of such features. Where a light-diffusing material is laminated to a reflective surface, increases in angle of view to achieve appropriate reflective characteristics may be impossible or may be obtainable only to the detriment of one other important factor such as brightness (reduced if film thickness is increased), flexibility or cost. Where reflective diffusion is obtained by providing an array of geometric features, the angle of view can only be changed by changing the geometric features. The geometric features can only be changed by changing the mould, press tools or other tools used to produce these features, and this is expensive.

It is among the objects of the invention to provide an improved light diffusing material suitable for use as a back projection screen, to provide an improved material suitable for use as a front projection screen or in reflective signs or in analogous applications, and to provide improved methods of manufacturing such materials.

It is known to provide a diffusion or rear projection screen by a technique in which a layer of photopolymerisable material is exposed to a pattern of polymerising light comprising an array of spots of light (or, alternatively an array of dark spots in a light field) to induce selective polymerisation of the material with consequent refractive index graduations throughout the material, resulting in a light dispersing or diffusing effect. Such selective photopolymerisation may be brought about, for example, by applying to one surface of a layer of photopolymerisable material supported on a substrate, an optical mask comprising an array of light-transmitting areas in opaque surround (or alternatively, a mask comprising an array of opaque areas in a transparent surround). The technique may be substantially that disclosed in WO88/09952 and European Patent No. 0294122 in which the mask apertures are substantially circular, resulting in the production of an array of graded refractive index lenses in the photopolymerised layer. Alternatively, the mask apertures may be oval or ellipsoidal in shape, with their major axes extending parallel with one another, thereby producing an array of astigmatic graded refractive index lenses, as a result of which the photopolymer layer has asymmetric characteristics as regards angle of view. That is to say, the angle of view (fwhm) is greater in one plane perpendicular to the plane of the light diffusing sheet material than in an orthogonal plane perpendicular to the plane of the light diffusing sheet material. Techniques disclosed in International Patent Application No. PCT/GB94/01281 published as WO94/29768 allow the production of a mask in which the array of apertures in the mask conforms to a random "speckle" pattern, in which individual apertures are irregularly and randomly shaped.

WO88/09952 discloses methods of making a rear-projection screen comprising providing a sheet of light-transmitting UV polymerisable material of a type in which, after polymerisation, the refractive index varies with the degree of polymerisation. In these methods, the photopolymerisable material is exposed to light through an optical mask, comprising an array of opaque dots in a clear background, or an array of clear holes in an opaque background, to form, by selective polymerisation, a respective graded refractive index lens under each said opaque spot or clear hole.

WO88/09952 also discloses a screen formed by such method in which at different locations in a planar screen the graded refractive index lenses have different inclinations with respect to the plane of the screen and WO88/09952 indicates that this may be achieved by directing the angle of arrival of the radiation.

WO94/29768 discloses a development of the method of WO88/09952 in which the optical mask through which the photopolymerisable material is exposed to UV radiation is not a half-tone screen nor a mask derived from a half-tone, but is a randomised optical mask produced by exposure of a photographic plate to light through a random structure, or my exposure of a photographic plate to a holographic speckle patter produced by directing laser light through a ground glass plate.

WO88/09952 indicates that in the latter case, a diffuser having asymmetrical light diffusing properties can be produced by using a ground glass plate of rectangular, rather than square, shape or by forming the speckle pattern of the mask by scanning a ground glass plate with a laser beam of elliptical cross-section. In WO94/29768, however, the asymmetrical diffusion properties of the diffusion screen ultimately produced are due to the apertures in the optical mask through which the photopolymer is exposed being longer in one direction in the plane of the screen than in a perpendicular direction in the plane of the screen.

In the techniques described above, the polymerising light incident on the mask and underlying photopolymer layer at any particular point on the photopolymer layer arrives from a single direction (although that direction, in some cases in WO88/09952, at least, is not precisely the same at all locations on the photopolymer layer). However, the applicants have discovered that useful properties can be imparted to the resulting screen if, during exposure, the light or other polymerising radiation is directed into the photopolymerisable material at an angle other than substantially normally, or if multiple sources of light or other polymerising radiation are used to create multiple beams at least some of which are inclined to the plane of the photopolymer layer. The applicants have also found that by adopting such expedients whilst at the same time ensuring that the exposure arrangement is symmetrical about a preferred axis, for example an axis normal to the layer of polymerisable material, symmetry of the resulting diffusion characteristics about such axis can be obtained. Such symmetry can also be obtained by rotation of the assembly including the layer of polymerisable material relative to the exposure means about such axis during exposure.

According to one aspect of the invention there is provided a method of making a light-diffusing screen comprising providing a sheet of a light-transmitting radiation polymerisable material of a type in which, after polymerisation, the refractive index varies with degree of polymerisation, and exposing said material to a predetermined pattern of polymerising radiation comprising an array of spots of high intensity radiation in a background of lower or zero intensity radiation, or comprising an array of spots of lower or zero intensity radiation in a background of high intensity radiation, characterised in that, during the exposure of said material, it is exposed to polymerising radiation from at least two different directions, such that over an area of the material exposed, each exposed location is exposed to such polymerisation from both of said two directions.

According to another aspect of the invention there is provided a light-diffusing sheet as defined in claim 14.

Said graded refractive index features comprise a first set of graded refractive index lenses having their optical axes extending along a first direction which is inclined with respect to the plane of the screen and a second set of graded refractive index lenses having their optical axes extending along a second direction which is inclined with respect to the plane of the screen.

Whilst, in some embodiments of the invention, the polymerisable material used is such that polymerisation can be effected or initiated by exposure to light, and in particular to ultraviolet light, it will be appreciated that polymerisable material may be used which is such that polymerisation can be effected by forms of radiation, for example by electron beams or ion beams. The term "radiation polymerisable" as used herein is intended to include such variants as well as materials polymerisable by ultraviolet light.

Preferably, during the exposure of said material, it is exposed at least principally to polymerising radiation from two directions which are equally and oppositely inclined with respect to a plane which is perpendicular to the plane of the sheet of material.

Diffusion or rear projection screens in accordance with some embodiments of the invention can be made to have a pronounced asymmetry. Further, by variation of such factors as the incident angles of the light used for exposure of the photopolymer, it is possible to tailor the degree of asymmetry as well as other parameters, such as "strength" of diffusion (e.g. fwhm).

Embodiments of the invention are described below with reference to the accompanying drawings, wherein:

FIGURE 1 is a diagrammatic side elevation drawing illustrating a first method of producing a diffusion screen in accordance with the present invention,

FIGURE 2 is a diagrammatic side elevation drawing illustrating a second method of producing a diffusion screen in accordance with the present invention, and

FIGURE 3 is a diagrammatic view, corresponding to Figure 2 but to a larger scale and illustrated by ray-tracing,

FIGURE 4 shows a ray trace analysis for a prismatic film,

FIGURE 5 is a view similar to Figure 1 illustrating a method of producing a diffusion screen,

FIGURE 6 is a view similar to Figures 1 and 5 but illustrating a yet further method of producing a diffusion screen in accordance with the invention,

FIGURE 7 is a view similar to Figure 2 but illustrating a still further method of producing a diffusion screen in accordance with the invention,

FIGURE 8 is a diagrammatic perspective view illustrating a still further method of producing a diffusion screen in accordance with the invention.

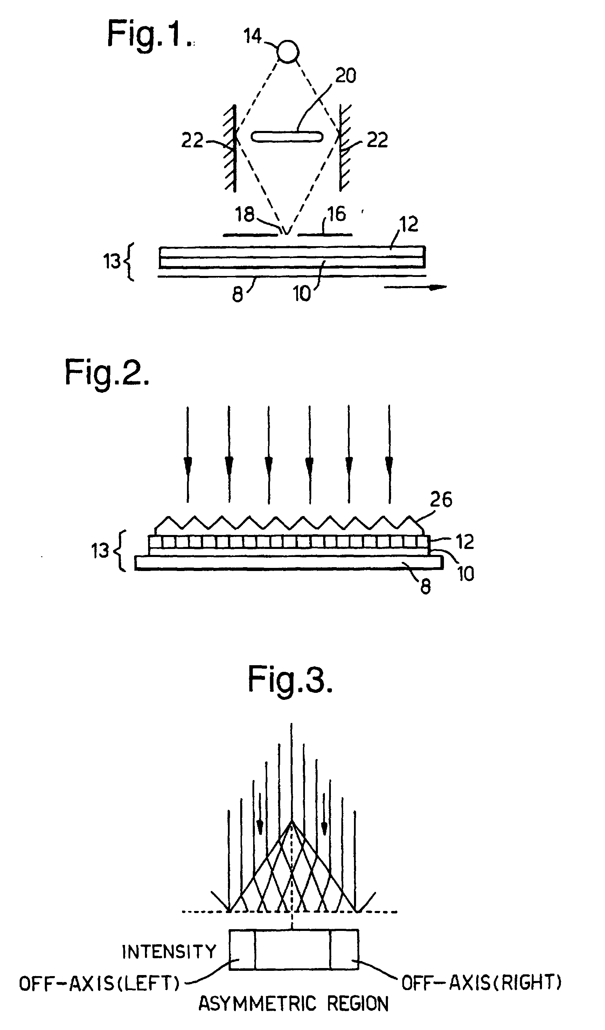

Referring to Figure 1, there is shown at 10 a layer of a transparent photopolymerisable medium supported by a flat transparent substrate 8. The medium forming layer 10 may be a photopolymerisable monomer of the kind referred to in E-0294122 EP or may be that supplied by DuPont under the Registered Trade Mark OMNIDEX and having the type designation HRF 150 or HRF 600, discussed in more detail in, for example, W095/06887. Superimposed upon the photopolymerisable layer 10 is an optical mask 12 of any of the kinds referred to above with the apertured opaque layer on the mask being in contact with the layer 10. Means (not shown) is provided for moving the substrate (8)/mask (12)/photopolymer (10) combination (herein referred to as combination 13) in its own plane in the direction indicated by the arrow, past exposure means comprising a source 14 of polymerising radiation, such as an ultraviolet strip lamp, disposed at some distance above the plane of the combination 13 and parallel therewith, the strip lamp extending perpendicular to the direction of the arrow.

Disposed directly above the combination 13 is an opaque screen 16 spaced slightly from the mask 12 and parallel therewith, the screen 16 having an aperture or slot 18 therein which is elongate in the same direction as the strip light source 14, the slot 18 being disposed directly below source 14 so that a notional plane including the axis of the strip source 14 and that of the slot 18 is perpendicular to the plane of combination 13. An opaque baffle 20 is disposed between the source 14 and slot 18 to prevent light from the source 14 from passing directly to the slot. On either side of the baffle 20 are arranged opposing mirrors 22, parallel with one another and with the axes of strip source 14 and slot 18 and perpendicular to the plane of the layer 10.

With this arrangement, the two mirrors reflect respective beams of light from the source 14 through the slot 18 and thus through the mask 12 and into the layer 10, the two beams being equally and oppositely inclined with respect to the plane, perpendicular to the plane of combination 13, passing through the slot 10 and source 14. During such exposure, the combination 13 is traversed steadily past the slot 18 to expose the entire area of the mask (and the polymerisable medium 10 beneath the light transmitting portions of the mask). The use of a slot 18 past which the combination 13 is traversed is necessary simply to ensure that all parts of the combination are exposed to light from the same angles or the same limited range of angles. It would, of course, be possible to dispense with the traversing of the combination 13 relative to the exposure means if parallel beams of sufficient width and intensity to encompass the whole of layer 10 at once were available, but this implies, for example, the availability of relatively expensive optics. It has been found, incidentally, that it is not necessary to have a single source 14. Corresponding results have been obtained by using two separate UV light sources (such as two parallel strip sources), arranged at equal and opposite angles with respect to the slot 18.

A diffusing screen produced by the method described above with respect to Figure 1 has asymmetrical diffusion characteristics, in the sense noted above and it should be noted that the maximum spread of light by the resulting screen is greatest in planes parallel with the planes of mirrors 22 in the specific arrangement shown. The extent of such maximum spread increases with increased inclination of the beams passing through slot 18 to the normal to the plane of the photopolymer sheet 10.

It has been found that the asymmetrical diffusion effect noted is obtained even if only an initial part of the exposure of layer 10 through mask 12 is by mutually inclined light beams, with the remainder of the exposure being by radiation incident normally on the mask 12/layer 10 combination.

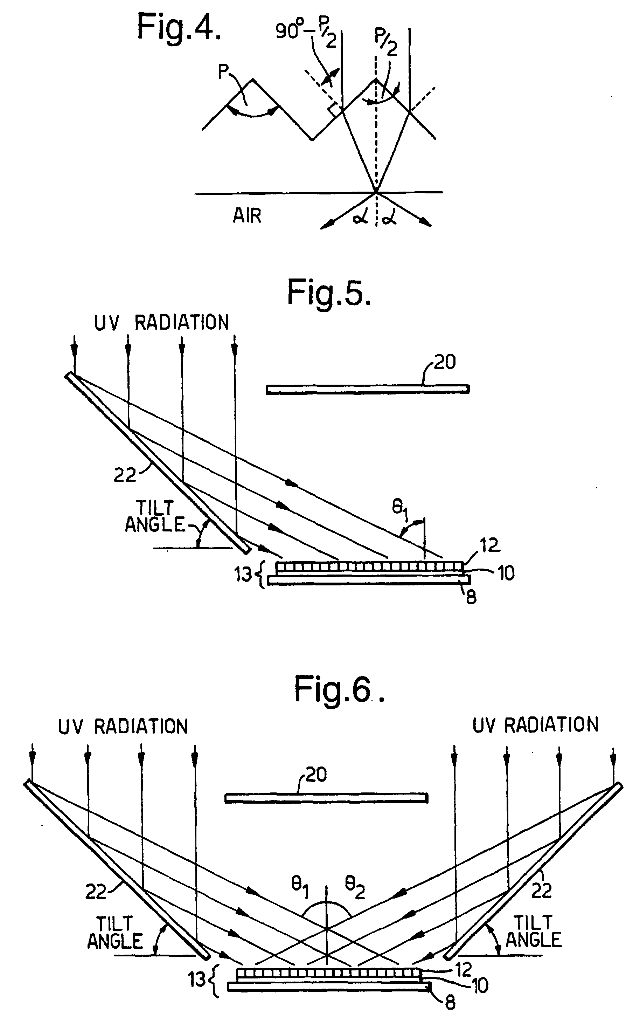

It will be appreciated that asymmetry of diffusion is not dependent upon strict equality of inclination of the beams used for exposure of the layer 10. Indeed, as discussed below, asymmetrical diffusion characteristics are also obtainable using an exposure regime such as shown in Figure 5 in which only a single inclined beam is used.

Referring to Figures 2 and 3, in another method of exposing the photopolymerisable layer 10 to. light from two oppositely inclined directions, use is made of a transparent prismatic film or sheet 26 having a series of identical parallel roof-shaped ridges forming one surface of the film or sheet 26 and having an opposing flat surface. Such a film is known, and is available from the 3M Company. Such a film is referred to as "brightness enhancing film" or "BEF", below.

In the following, referring to Figure 2, in which like parts have like references, a sheet of the prismatic film or BEF referred to is placed directly on top of the mask 12, itself, of course, placed directly on the upper surface of the layer 10 of photopolymerisable material. The prismatic film 26 is placed with its flat surface lowermost in Figure 2, engaging the mask 12. In this arrangement, the photopolymer 10 is exposed, through the film 26 and mask 12, by polymerising radiation incident on the assembly normally, (i.e. perpendicular to the plane of the layer 10, etc.), from a suitable UV light source (not shown). Unless a parallel beam of polymerising radiation of the width sufficient for exposure of the whole of the photopolymer layer 10 is available, it may, again, be necessary to expose the photopolymer through a slot disposed above the layer 10/mask 12/film 26 combination with that combination being traversed steadily beneath the slot during exposure, in much the same way as described with reference to Figure 1.

The effect of the prismatic film is illustrated in more detail in Figure 3 and is, as illustrated, to produce, below each prismatic ridge, a region in which the photopolymer is exposed to light from two directions inclined equally and oppositely with respect to the normal to the plane of the layer 10. As a result, each such region exhibits asymmetrical diffusion characteristics in much the same way as the product obtained by the method to which Figure 1 relates. Because, as illustrated in Figure 3, there are regions adjoining each trough in the prismatic film which receive light from only one (inclined) direction, these regions may not possess asymmetrical diffusion characteristics. If the pitch of the prismatic ribs (i.e. the distance between the ridge of one roof-shaped rib and the ridge of the next) is small (see Table 1 below), there is no discernible variation in diffusion characteristics from one part of, the resulting photopolymer diffusion screen to another, in normal use of the screen.

Figure 4 shows a ray trace analysis for a generic prismatic film. The variables of note, assuming that the incident radiation is normal to the plane of the flat surface of the prismatic film, are the prism angle (P) and refractive index (n) of the medium. Analysis of the situation illustrated in Figure 4 shows that the exit angle $\alpha$, is given by:-

$$\alpha = \sin^{-1}\left[ n \cos\left(\frac{P}{2} + i\right)\right]$$

The refractive index of the photopolymerisable materials referred to above is relatively close to that of the currently preferred BEF film, namely polycarbonate, so that with the prismatic film in intimate contact with the layer 10 of photopolymerisable material, the refraction at the interface between the photopolymerisable material and the prismatic film is far less pronounced than that represented in Figure 4.

The choice of exit angles provides one means of controlling the asymmetry of the resulting product.

An example of the production of an asymmetric diffusing material by the method outlined above is set out below.

EXAMPLE 1

The photopolymerisable material used was black backed 90μm DuPont HRF 600 material exposed to UV light, through a mask, through polycarbonate BEF film having a prism pitch of 31 μm, a prism angle of 100° and a refractive index of 1.586. The exposure was to UV2 ultraviolet light with an intensity of 4 mw per cm$^2$ for 15 minutes. After exposure, the polymerisable material was heated to 140°C and maintained at that temperature for 5 minutes. The following table, Table 1, illustrates the results obtained. For comparison, a diffusion screen produced using the same photopolymerisable material and mask but with normally incident radiation (i.e. without the BEF film) was also tested and the results are also set out in Table 1 below for comparison (Microsharp standard). Table 1 below also sets out corresponding results for a product obtained by laminating two layers of the photopolymer diffusion screen produced by the method described above (with the direction of widest angle view being the same for both sheets in the laminate) (Double Microsharp - BEF).

TABLE 1

| Sample | FWHM-x | FWHM-y | Asymmetry Factor | Screen Gain |
|---|---|---|---|---|
| Microsharp - std | 45° | 45° | 1 | 1.75 |
| Microsharp - BEF | 35° | 13° | 2.7 | 6.75 |
| Double Microsharp BEF | 47° | 20° | 2.35 | 2.5 |

As noted from the Table above, a marked degree of asymmetry in diffusion is obtainable.

As shown in Table 1 above, the screen gain (i.e. the ratio of the maximum brightness of the screen (when back-illuminated by a uniform parallel beam) as viewed at the appropriate angle to the average brightness of the screen over all viewing angles, was also increased.

Referring to Figure 5, this shows a further not falling under the scope of present claim 1 method in which the mask/polymerisable material/substrate combination 13 is illuminated by a single beam directed at an angle $\theta_1$ relative to the normal to the plane of the mask/polymerisable material/substrate combination. The beam may simply be a slightly divergent beam coming from, e.g. an ultraviolet source, the mask/polymerisable material/substrate combination being shielded from direct radiation from the source by a baffle, as in the embodiment of Figure 1, and as in the arrangement of Figure 1 may be exposed through a slot in an opaque screen whilst the combination 13 is traversed past this slot. However, as illustrated in Figure 2, the mask/polymerisable material/substrate combination may be exposed by a collimated, i.e. substantially parallel beam, initially directed normal to the plane of the polymerisable material and reflected by an inclined mirror onto the mask/polymerisable material/substrate combination at the angle $\theta_1$ relative to the normal, the baffle again serving to intercept direct radiation not reflected from the mirror.

It will be appreciated, of course, that it is equally possible to utilise a collimated light source directed onto the mask/polymerisable material/substrate combination without any intervening mirrors or baffles.

Figure 6 illustrates a variant of the method of claim 1, in effect, where a substantially parallel, collimated beam is directed, initially normally to the plane of the mask/polymerisable material/substrate combination 13, to be reflected by two inclined plane mirrors on either side of the material to strike the combination 13 at angles of $\theta_1$ and $\theta_2$ respectively to the normal to said plane. A baffle 20 is again provided to intercept direct light not reflected from the mirrors. Again, it will be understood that the light beams striking the material at the angles $\theta_1$ and $\theta_2$ could alternatively come directly from respective collimated light sources arranged at the appropriate angles, without the need for respective mirrors or baffles.

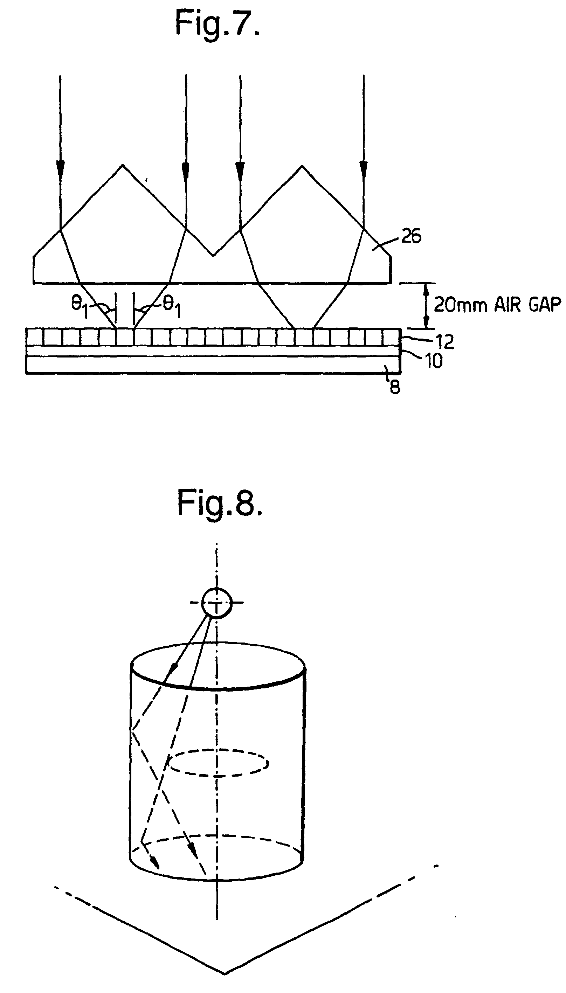

Figure 7 illustrates a variant of the method of Figure 2 which, instead of the BEF being in contact with the mask 12, it is spaced thereabove by a gap (of 20 mm in the example illustrated).

Tables 2 and 3 below relate to a further set of examples, in which the exposure regime was as illustrated in Figure 5 (for examples #1 to #3); Figure 6 (for examples #4 and #5) and Figure 7 (for examples #6 and #7).

In these examples, the photopolymerisable material (90 µm thick, clear backed DuPont HRF600 photopolymer) was exposed successively to ultraviolet light as the polymerising radiation, the light being collimated to afford a uniform parallel beam. The respective exposure energies in the UV1, UV2 and UV3 bands of the ultraviolet spectrum were as indicated in the columns headed UV1, UV2 and UV3 in Table 2 below. After exposure, the material was oven cured for 20 minutes at 100°C. The columns headed $\theta_1$ and $\theta_2$ in Table 2 indicate the values of $\theta_1$ (and $\theta_2$ where applicable) in the exposure arrangements illustrated in Figures 5 and 6.

Table 3 below sets out the light diffusing properties of the resulting products. The light diffusing properties of the material were investigated using a collimated parallel beam of light directed onto the respective material along an axis and measuring the light intensity of the light, from said beam, directed by the material at different angles relative to said axis. For some of these measurements, the angle of the plane of the material relative to said axis was varied, and the angles referred to in the column headed "Comments" in Table 3 are the angles, for these measurements, of the normal to the plane of the material to said axis. The control sample (#1) possessed a diffusion pattern exhibiting rotational symmetry about an axis normal to the plane of the material. The off-axis sample (#2) possessed a similar diffusion pattern when illuminated off-axis at an incident angle approximately equal to the recording angle of incidence. such that the incident beam from the light source was aligned along the direction, relative to the material, of the beam of light used during exposure. The samples produced by the twin mirror (#4 and #5) and BEF approaches (#6 and #7) using identical processing conditions possessed very similar performance characteristics. Like the off-axis sample (#2) when illuminated at an incident angle approximately equal to either recording angle of incidence such that the incident beam from the light source was aligned along the direction, relative to the material of the beam of light used during exposure, a rotationally symmetrical diffusion pattern was observed, i.e. possessing rotational symmetry about the axis of the beam incident upon the material in the measuring set-up.

In Table 3, the columns headed "FWHM(0) x, y" relate to measurements made with the material perpendicular to the axis of the incident mean, with the plane in which the goniometer measurements were made being parallel with (y) and perpendicular to (x) the plane in which the angles $\theta_1$, $\theta_2$ are measured in the regimes of Figures 5, 6 and 7 and the corresponding plane in the regime of Figures 3 and 4).

As will be noted the materials of Examples #2 to #7 possessed marked asymmetry in diffusion characteristics between the "x" and "y" measurements, this being quantified in the column headed "Asy'". Thus, the asymmetric samples produced by the two mirror (#3) and BEF approaches (#6 and #7) using identical processing conditions possessed very similar performance characteristics. When illuminated by collimated light normal to their input face they possessed an approximately 2:1 elliptical profile.

The last column sets out the screen gain for each of these examples.

TABLE 2 – Summary of processing conditions

| # | Description | Inc' $\theta_1$ | Inc' $\theta_2$ | UV1 mJ/cm² | UV2 mJ/cm² | UV3 mJ/cm² | Oven Cure |
|---|---|---|---|---|---|---|---|
| 1 | Control | 0° | 0° | 23.8 | 122.4 | 34.0 | 100°C for 20 mins |
| 2 | Off-axis, mirrors tilted 15° | 30° | n/a | 15.9 | 81.0 | 22.4 | 100°C for 20 mins |
| 3 | Off-axis, mirrors tilted 5° | 10° | n/a | 15.9 | 81.0 | 22.4 | 100°C for 20 mins |
| 4 | Asymmetry through twin mirrors tilted at 15° | 30° | 30° | 31.5 | 162.0 | 44.8 | 100°C for 20 mins |
| 5 | Asymmetry through twin mirrors tilted at 5° | 10° | 10° | 31.5 | 162.0 | 44.8 | 100°C for 20 mins |
| 6 | Asymmetry through BEF on mask | 30° | 30° | 23.8 | 100.8 | 34.0 | 100°C for 20 mins |
| 7 | Asymmetry through BEF at 20mm above mask | 30° | 30° | 23.8 | 100.8 | 34.0 | 100°C for 20 mins |

TABLE 3: Summary of processing conditions, FWHM(0) refers the value at normal incidence

| # | Description | Comments | FWHM(0) x | FWHM(0) y | Asy' | Gain |
|---|---|---|---|---|---|---|
| 1 | Control | Standard symmetrical diffuser | 45° | 45° | 1 | 3.2 |
| 2 | Off-axis, mirrors tilted 15° | Maximum diffusion occurs at 30° | 20° | 6° | 3.3 | 30 |
| 3 | Off-axis, mirrors tiled 5° | Maximum diffusion occurs at 10° | 36° | 20° | 1.8 | 5.8 |
| 4 | Asymmetry through twin mirrors tilted at 15° | Maximum diffusion occurs at ± 30° | 33° | 14° | 2.4 | 5.9 |
| 5 | Asymmetry through twin mirrors tilted at 5° | Maximum diffusion occurs at ± 10° | 42° | 38° | 1.1 | 3.5 |
| 6 | Asymmetry through BEF on mask | Maximum diffusion occurs at ± 30° | 30° | 11° | 2.7 | 12.4 |
| 7 | Assymetry through BEF at 20mm above mask | Maximum diffusion occurs at ± 10° | 32° | 12° | 2.7 | 10 |

Example #7 illustrates that it is not necessary to have the BEF in intimate contact with the contact mask making the regime compatible with a continuous process.

Examples #3 and #5 also indicate how by carefully tailoring the recording geometry varying degrees of off-axis or asymmetric performance can be encoded. For example, a reduction in the mirror tilt angle will result in a reduction in the degree of asymmetry and potential off-axis performance.

Referring to Figure 8, a yet further exposure method is illustrated which is similar in some respects to the arrangement of Figure 1, except that the two opposing plane mirrors are replaced by a cylindrical mirror, that is to say by a mirror in the form of an open-ended hollow cylinder providing an internal reflective surface, the mirror being arranged above the mask/polymerisable material/substrate combination with its longitudinal axis normal to the plane of that combination, a point light source (or pseudo point light source such as a round bulb) being disposed above the upper end of the cylinder on said axis. A centrally located circular baffle is mounted with the cylinder. As a result of the circular symmetry of the arrangement about the cylinder axis, the mask/polymerisable material/substrate combination is subjected to radiation from, in effect, an extended annular light source centred on the axis of the cylinder. It will be understood that the cylindrical mirror/point light source arrangement may in fact be replaced by a real extended annular light source. A similar effect may be provided by, for example, providing a single collimated beam striking the mask/ polymerisable material/substrate combination at a desired angle to the normal and rotating the combination in its own plane at a speed sufficient to ensure that the period of one revolution is small in relation to the curing time or the polymerisation initiation time of the material.

As a further variation (not illustrated) of the method of Figure 1, and by analogy with Figure 6, the combination 13 may be exposed using a collimated parallel beam of polymerising radiation directed initially normally towards the combination but reflected onto the combination 13 by a hollow frusto-conical mirror.

Whilst in the examples described with reference to Figures 1 to 4 and 6 to 8, the exposure arrangement is symmetrical about an axis or plane perpendicular to the plane of the polymerisable material, for some applications, for example where, in use, the diffusing material will be illuminated obliquely, the exposure arrangement may be centred on an axis or plane which is inclined to the plane of the polymerisable material. Thus, for example, in an arrangement similar to that of Figure 6, the mirrors may not be equally inclined so that consequently the angles $\theta_1$ and $\theta_2$ may be different. Likewise, in an arrangement similar to that of Figure 8, the axis of the cylindrical mirror may be inclined relative to the plane of the polymerisable material, or the light source may be offset laterally from the axes of the cylinder.

Similarly, in arrangements using prismatic film, such as those illustrated in Figures 2 to 4 and 7, the light may be incident obliquely on the prismatic film/mask/polymerisable material sandwich so as to be inclined at different angles to the two faces of each prism. Alternatively, or additionally, the individual prisms of the prismatic film may be asymmetrical, for example of saw-tooth form.

As indicated above, it is preferred, in most applications, that the light diffusing material should be uniform as to its light diffusing properties over the whole area of the material and this may be achieved by using, for exposure, collimated parallel beams of light or other polymerising radiation which are of sufficient width and which are sufficiently uniform across their width, where the material is exposed through a contact mask. Alternatively, the material may be traversed past a slot, as in Figure 1, during exposure, to secure uniformity over an extended length of the material. However, as also indicated above, for some applications lack of uniformity across the area of the material may not present any disadvantage and, indeed, may be deliberately induced to secure a particular effect. It is contemplated, for example, that it may be possible, by using polymerising radiation striking the material at different angles in different zones to produce diffusion screens which also operate to some degree as lenses or prisms, perhaps using a stepped variation in exposure angle to provide structures analogous to Fresnel lenses or prisms.

Whilst, in the examples illustrated with reference to the drawings, selective exposure of the polymerisable material to polymerising radiation is obtained by "contact printing", i.e. by exposure through an aperture mask in contact with the material, it will be understood that such selective exposure may also be obtained in other ways, for example by an image projection arrangement, by an intermittently energised scanned beam, or even holographically using coherent light.

It will be understood that whereas, for most applications, collimated (parallel) beams are preferred for exposure, diverging or converging beams may be used in some instances. Likewise, mirrors may be used which are convex or concave, rather than plane, depending upon the effects desired.


**Claims**

1. A method of making a light-diffusing screen comprising providing a sheet (10) of a light-transmitting radiation polymerisable material of a type in which, after polymerisation, the refractive index varies with degree of polymerisation, and exposing said material to a predetermined pattern of polymerising radiation comprising an array of spots of high intensity radiation in a background of lower or zero intensity radiation, or comprising an array of spots of lower or zero intensity radiation in a background of high intensity radiation, **characterised in that**, during the exposure of said material, it is exposed to polymerising radiation from at least two different directions such that over an area of the material exposed, each exposed location is exposed to such polymerisation from both of said two directions.

2. A method according to Claim 1 in which said two directions are oppositely inclined with respect to a plane which is perpendicular to the plane of the sheet of light-transmitting radiation polymerisable material.

3. A method according to Claim 2 wherein the illumination from said two directions is obtained by using two mirrors (22) to reflect light from a common source (14) onto the same region of the radiation polymerisable material (10).

4. A method according to Claim 3 wherein the illumination from said two directions is obtained by superimposing upon the radiation polymerisable material (10) a sheet of light-transmitting prismatic material (26) having a series of parallel, gable-shaped ridges, and directing a beam of polymerising light onto the prismatic material.

5. A method according to any of Claims 2 to 4 wherein said two directions are at different angles with respect to said plane perpendicular to the plane of said sheet of radiation polymerisable material (10).

6. A method according to any of Claims 2 to 4 wherein said two directions are equally and oppositely inclined with respect to said plane perpendicular to the plane of said sheet of radiation polymerisable material (10).

7. A method according to Claim 1 wherein during exposure of said radiation polymerisable material, over an area of the radiation polymerisable material exposed, each exposed location is exposed to radiation from three or more directions.

8. A method according to Claim 1, wherein during exposure of said radiation polymerisable material, it is exposed to radiation from a real or virtual annular region centred on an axis perpendicularly to the plane of the sheet of radiation polymerisable material.

9. A method according to Claim 8 wherein the radiation polymerisable material is exposed to polymerising radiation using a mirror in the form of a hollow open-ended body of rotation having an internal reflective surface, said radiation polymerisable material being disposed on the axis of said body at or adjacent one end of the cylindrical mirror and a source of said polymerising radiation being placed on said axis at or adjacent the opposite end of the cylindrical mirror so that radiation from said source can enter said body of rotation to be reflected from the wall thereof onto said radiation polymerisable material.

10. A method according to Claim 9 wherein said body of rotation is a cylinder.

11. A method according to Claim 9 wherein said body of rotation is a frustum of a cone.

12. A method according to any of Claims 9 to 11 wherein a stop is provided to prevent or limit light reaching said radiation polymerisable material directly from said source.

13. A method according to Claim 1 wherein, during exposure of said radiation polymerisable material it is exposed to polymerising radiation from a direction inclined to the plane of the sheet of radiation polymerisable material whilst the material is rotated in its own plane, or whilst the source of said radiation is rotated around the material about an axis normal to the plane of said material.

14. A light-diffusing sheet material (10) having a first set of graded refractive index lenses having their optical axes extending along a first direction which is inclined with respect to the plane of the material and a second set of graded refractive index lenses having their optical axes extending along a second direction which is inclined with respect to the plane of the material, and being different from the first direction **characterised in that**, at each location where there is a graded refractive index lens of the first set, there is also a graded refractive index lens of the second set, so that respective said sets of graded refractive index lenses occupy the same regions of the sheet of material.

15. A light-diffusing sheet material according to Claim 14 which comprises a photopolymer.

**16.** A light diffusing sheet material according to Claim 14 wherein the mean orientational direction of said graded refractive index lenses is perpendicular to the plane of said sheet material (10).

**17.** A light-diffusing sheet material according to Claim 14 wherein the mean orientational direction of said graded refractive index lenses is itself inclined with respect to the plane of the material (10).

**Patentansprüche**

**1.** Verfahren zum Herstellen eines lichtstreuenden Schirms, welches umfaßt ein Bereitstellen einer Schicht (10) eines lichtdurchlässigen, mit Strahlung polymerisierbaren Materials einer Art, bei welchem, nach Polymerisation, der Brechungsindex mit dem Polymerisationsgrad variiert, und Exponieren des Materials einem vorherbestimmten Muster polymerisierender Strahlung, welches eine Anordnung von Punkten von Strahlung hoher Intensität in einem Hintergrund von Strahlung geringerer oder null Intensität umfaßt, oder eine Anordnung von Punkten von Strahlung von geringerer oder null Intensität in einem Hintergrund von Strahlung hoher Intensität umfaßt, **dadurch gekennzeichnet, daß**, während der Exposition des Materials, es polymerisierender Strahlung aus wenigstens zwei unterschiedlichen Richtungen ausgesetzt wird, so daß über einen Bereich des exponierten Materials jede exponierte Stelle einer solchen Polymerisation aus beiden der zwei Richtungen ausgesetzt wird.

**2.** Verfahren nach Anspruch 1, in welchem die zwei Richtungen entgegengesetzt geneigt sind in bezug auf eine Ebene, welche senkrecht zu der Ebene der Schicht des lichtdurchlässigen, mit Strahlung polymerisierbaren Materials liegt.

**3.** Verfahren nach Anspruch 2, bei welchem die Beleuchtung aus den zwei Richtungen erhalten wird unter Verwendung von zwei Spiegeln (22), um Licht aus einer gemeinsamen Quelle (14) auf den gleichen Bereich des mit Strahlung polymerisierbaren Materials (10) zu reflektieren.

**4.** Verfahren nach Anspruch 3, bei welchem die Beleuchtung aus den zwei Richtungen erhalten wird durch Auflegen auf das mit Strahlung polymerisierbare Material (10) einer Schicht eines lichtdurchlässigen, prismatischen Materials (26) mit einer Reihe von parallelen, giebelförmigen Rippen und durch Richten eines Strahls von polymerisierendem Licht auf das prismatische Material.

**5.** Verfahren nach einem der Ansprüche 2 bis 4, bei welchem die zwei Richtungen bei unterschiedlichen Winkeln in Bezug auf die Ebene senkrecht zu der Ebene der Schicht des mit Strahlung polymerisierbaren Materials (10) sind.

**6.** Verfahren nach einem der Ansprüche 2 bis 4, bei welchem die zwei Richtungen gleich und entgegengesetzt geneigt sind in Bezug auf die Ebene senkrecht zu der Ebene der Schicht des mit Strahlung polymerisierbaren Materials (10).

**7.** Verfahren nach Anspruch 1, bei welchem während der Exposition des mit Strahlung polymerisierbaren Materials, über einen Bereich des exponierten, mit Strahlung polymerisierbaren Materials, jede exponierte Stelle einer Strahlung aus drei oder mehr Richtungen ausgesetzt wird.

**8.** Verfahren nach Anspruch 1, bei welchem während der Exposition des mit Strahlung polymerisierbaren Materials es einer Strahlung aus einem realen oder virtuellen, kreisförmigen Bereich ausgesetzt wird, zentriert an einer Achse, welche senkrecht ist zu der Ebene der Schicht des mit Strahlung polymerisierbaren Materials.

**9.** Verfahren nach Anspruch 8, bei welchem das mit Strahlung polymerisierbare Material einer polymerisierenden Strahlung ausgesetzt wird unter Verwendung eines Spiegels in der Form eines hohlen, offenendigen Drehkörpers mit einer inneren, reflektierenden Oberfläche, wobei das mit Strahlung polymerisierbare Material auf der Achse des Körpers an oder benachbart einem Ende des zylindrischen Spiegels angeordnet wird und eine Quelle der polymerisierenden Strahlung auf der Achse an oder benachbart dem entgegengesetzten Ende des zylindrischen Spiegels angeordnet wird, so daß Strahlung aus der Quelle in den Drehkörper eintreten kann, um von der Wand desselben auf das mit Strahlung polymerisierbare Material reflektiert zu werden.

**10.** Verfahren nach Anbspruch 9, bei welchem der Drehkörper ein Zylinder ist.

**11.** Verfahren nach Anspruch 9, bei welchem der Drehkörper ein Kegelstumpf ist.

**12.** Verfahren nach einem der Ansprüche 9 bis 11, bei welchem eine Stoppvorrichtung bereitgestellt wird, um zu verhindern oder zu begrenzen, daß Licht das mit Strahlung polymerisierbare Material direkt aus der Quelle erreicht.

**13.** Verfahren nach Anspruch 1, bei welchem während der Exposition des mit Strahlung polymerisierbaren Materials es einer polymerisierenden Strahlung aus einer Richtung ausgesetzt wird, welche zu der Ebene der Schicht des mit Strahlung polymerisierbaren Materials geneigt ist, während das Material in seiner eigenen Ebene gedreht wird, oder während die Quelle der Strahlung um das Material um eine Achse gedreht wird, welche senkrecht zu der Ebene des Materials ist.

**14.** Lichtstreuendes Schichtmaterial (10) mit einem ersten Satz von Linsen mit abgestuftem Brechungsindex, deren optische Achsen sich entlang einer ersten Richtung erstrecken, welche in Bezug auf die Ebene des Materials geneigt ist, und einem zweiten Satz von Linsen mit abgestuftem Brechungsindex, deren optische Achsen sich entlang einer zweiten Richtung erstrecken, welche in Bezug auf die Ebene des Materials geneigt ist und von der ersten Richtung unterschiedlich ist, **dadurch gekennzeichnet, daß** bei jeder Stelle, wo eine Linse mit abgestuftem Brechungsindex des ersten Satzes ist, dort ebenfalls eine Linse mit abgestuftem Brechungsindex des zweiten Satzes ist, so daß die jeweiligen Sätze der Linsen mit abgestuftem Brechungsindex die gleichen Bereiche der Schicht des Materials belegen.

**15.** Lichtstreuendes Schichtmaterial nach Anspruch 14, welches ein Photopolymer umfaßt.

**16.** Lichtstreuendes Schichtmaterial nach Anspruch 14, bei welchem die mittlere Orientierungsrichtung der Linsen mit abgestuftem Brechungsindex senkrecht zu der Ebene des Schichtmaterials (10) ist.

**17.** Lichtstreuendes Schichtmaterial nach Anspruch 14, bei welchem die mittlere Orientierungsrichtung der Linsen mit abgestuftem Brechungsindex selbst in Bezug auf die Ebene des Materials (10) geneigt ist.

**Revendications**

**1.** Procédé de fabrication d'un écran à diffusion de lumière comprenant la fourniture d'une feuille (10) d'un matériau transmettant la lumière polymérisable par rayonnement d'un type dans lequel, après polymérisation, l'indice de réfraction varie avec le degré de la polymérisation, et l'exposition dudit matériau à un motif prédéterminé de rayonnement de polymérisation comprenant une matrice de points de rayonnement de haute intensité dans un arrière-plan de rayonnement d'une intensité faible ou nulle, ou comprenant une matrice de points de rayonnement d'une intensité faible ou nulle dans un arrière-plan de haute intensité, **caractérisé en ce que** lors de l'exposition dudit matériau, il est exposé à un rayonnement polymérisant provenant au moins de deux directions différentes de telle sorte que, sur une surface du matériau exposé, chaque emplacement exposé soit exposé à une telle polymérisation depuis les deux desdites deux directions.

**2.** Procédé selon la revendication 1, dans lequel lesdites deux directions sont inclinées de manière opposée par rapport à un plan qui est perpendiculaire au plan de la feuille de matériau transmettant la lumière polymérisable par rayonnement.

**3.** Procédé selon la revendication 2, dans lequel l'éclairage à partir desdites deux directions est obtenu en utilisant deux miroirs (22) pour réfléchir la lumière à partir d'une source commune (14) sur la même zone du matériau polymérisable par rayonnement (10).

**4.** Procédé selon la revendication 3, dans lequel l'éclairage à partir desdites deux directions est obtenu en superposant sur le matériau polymérisable par rayonnement (10) une feuille de matériau prismatique à transmission de lumière (26) ayant une série de nervures parallèles de forme triangulaire et en dirigeant un faisceau de lumière polymérisante sur le matériau prismatique.

**5.** Procédé selon l'une quelconque des revendications 2 à 4, dans lequel lesdites deux directions sont à des angles différents par rapport audit plan perpendiculaire au plan de ladite feuille de matériau polymérisable par rayonnement (10).

**6.** Procédé selon l'une quelconque des revendications 2 à 4, dans lequel lesdites deux directions sont inclinées de manière égale et opposée par rapport audit plan perpendiculaire au plan de ladite feuille de matériau polymérisable par rayonnement (10).

7. Procédé selon la revendication 1, dans lequel lors de l'exposition dudit matériau polymérisable par rayonnement, sur une surface du matériau polymérisable par rayonnement exposée, chaque emplacement exposé est exposé par un rayonnement provenant de trois directions ou plus.

8. Procédé selon la revendication 1, dans lequel lors de l'exposition dudit matériau polymérisable par rayonnement, il est exposé au rayonnement provenant d'une zone annulaire réelle ou virtuelle, centrée sur un axe perpendiculaire au plan de la feuille de matériau polymérisable par rayonnement.

9. Procédé selon la revendication 8, dans lequel le matériau polymérisable par rayonnement est exposé au rayonnement polymérisant en utilisant un miroir de la forme d'un corps de rotation creux à extrémité ouverte ayant une surface à réflexion interne, ledit matériau polymérisable par rayonnement étant disposé sur l'axe dudit corps au niveau d'une extrémité du miroir cylindrique ou adjacent à celle-ci et une source dudit rayonnement polymérisant étant placée sur ledit axe au niveau de l'extrémité opposée du miroir cylindrique ou adjacent à celle-ci, de telle sorte que le rayonnement provenant de ladite source puisse pénétrer dans ledit corps de rotation pour être réfléchi à partir de la paroi de celui-ci sur ledit matériau polymérisable par rayonnement.

10. Procédé selon la revendication 9, dans lequel ledit corps de rotation est un cylindre.

11. Procédé selon la revendication 9, dans lequel ledit corps de rotation est un tronc de cône.

12. Procédé selon l'une quelconque des revendications 9 à 11, dans lequel une butée est prévue pour empêcher ou limiter l'impact de la lumière sur ledit matériau polymérisable par rayonnement directement à partir de ladite source.

13. Procédé selon la revendication 1 dans lequel, lors de l'exposition dudit matériau polymérisable par rayonnement, il est exposé au rayonnement polymérisant à partir d'une direction inclinée par rapport au plan de la feuille de matériau polymérisable par rayonnement tandis que le matériau est tourné sur son propre plan, ou tandis que la source dudit rayonnement est tournée autour du matériau sur un axe perpendiculaire au plan dudit matériau.

14. Feuille de matériau diffusant la lumière (10) comprenant un premier ensemble de lentilles à gradient d'indice de réfraction dont les axes optiques s'étendent le long d'une première direction qui est inclinée par rapport au plan du matériau et un second ensemble de lentilles à gradient d'indice de réfraction dont les axes optiques s'étendent le long d'une seconde direction qui est inclinée par rapport au plan du matériau et est différente de la première direction, **caractérisé en ce que**, au niveau de chaque emplacement où est présente une lentille à gradient d'indice de réfraction du premier ensemble, se trouve également une lentille à gradient d'indice de réfraction du second ensemble, de telle sorte que lesdits ensembles de lentilles à gradient d'indice de réfraction respectifs occupent les mêmes zones de la feuille de matériau.

15. Feuille de matériau à diffusion de lumière selon la revendication 14 qui comprend un photopolymère.

16. Feuille de matériau à diffusion de lumière selon la revendication 14, dans laquelle la direction orientationnelle moyenne desdites lentilles à gradient d'indice de réfraction est perpendiculaire au plan de ladite feuille de matériau (10).

17. Feuille de matériau à diffusion de lumière selon la revendication 14, dans laquelle la direction orientationnelle moyenne desdites lentilles à gradient d'indice de réfraction est elle-même inclinée par rapport au plan du matériau (10).

# Fig.1.

# Fig.2.

# Fig.3.

INTENSITY

OFF–AXIS(LEFT) — OFF–AXIS(RIGHT)

ASYMMETRIC REGION

# Fig.4.

$90° - \frac{P}{2}$

$\frac{P}{2}$

$\frac{P}{2}$

P

AIR

$\alpha$  $\alpha$

# Fig.5.

UV RADIATION

20

22

TILT ANGLE

$\theta_1$

13 {

12

10

8

# Fig.6.

UV RADIATION

UV RADIATION

20

22

$\theta_1$  $\theta_2$

22

TILT ANGLE

TILT ANGLE

13 {

12

10

8

# Fig.7.

$\theta_1$ $\theta_1$

20mm AIR GAP

26
12
10
8

# Fig.8.